# EUROPÄISCHE PATENTSCHRIFT

(11) **EP 1 259 714 B1**
(45) Veröffentlichungstag und Bekanntmachung des Hinweises auf die Patenterteilung: **03.05.2006**
(21) Anmeldenummer: 01913582.1
(22) Anmeldetag: 07.02.2001
(51) Int. Cl.: F01M 11/10

(54) **VERFAHREN ZUR BEURTEILUNG DES VERSCHLEISSES VON MOTORÖL**
METHOD FOR DETERMINING MOTOR OIL WEAR
PROCEDE PERMETTANT D'EVALUER L'USURE D'HUILE DE MOTEUR

(30) Priorität: 24.02.2000 DE 10008547
(43) Veröffentlichungstag der Anmeldung: 27.11.2002
(73) Patentinhaber: ROBERT BOSCH GMBH, 70442 Stuttgart (DE)
(72) Erfinder: JAKOBY, Bernhard, 72764 Reutlingen (DE); BUCH, Stephan, 71263 Weil der Stadt (DE); SCHATZ, Oliver, 72760 Reutlingen (DE)
(86) Internationale Anmeldenummer: PCT/DE2001/000460
(87) Internationale Veröffentlichungsnummer: WO 2001/063101

(56) Entgegenhaltungen:
- WO-A-99/24699
- WO-A-99/31478
- JP-A- 5 010 866
- JP-A- 5 215 682
- JP-A- 59 192 937
- US-A- 5 320 761

## Beschreibung

Die Erfindung betrifft ein Verfahren zur Beurteilung des Verschleißes von Motoröl.

### Stand der Technik

Es sind software-basierte Systeme zur Anzeige eines notwendigen Motorölwechsels bei Kraftfahrzeugen bekannt, von denen einige auf Algorithmen basieren, die Parameter wie etwa die seit dem letzten Ölwechsel zurückgelegte Kilometerfahrleistung oder die Häufigkeit von Kaltstarts auswerten.

Alternativ dazu wird bei anderen bekannten Verfahren auf Sensorsignale zurückgegriffen, die direkt den physikalischen Ölzustand beschreiben, wobei beispielsweise durch geeignete Sensoren die Dielektrititätszahl des Öls oder als weit zuverlässigere Größe die Ölviskosität gemessen werden kann. Aus der Bestimmung der Viskositätsveränderung des Motoröls seit dem letzten Ölwechsel kann dabei ein viskositäts-basiertes Ölwechselkriterium abgeleitet werden, da ein Motorölverschleiß üblicherweise mit einem Anstieg des Viskositätswertes verbunden ist. In einer Auswerteelektronik mit angeschlossener Anzeigevorrichtung kann bei herkömmlichen Systemen beispielsweise ein Viskositätsgrenzwert gespeichert werden, der mit den gemessenen Viskositätswerten des Motoröls verglichen wird und bei dessen Überschreitung dem Fahrzeugführer ein Hinweis auf die Fälligkeit des nächsten Motorölwechsels gegeben wird.

Die bei diesen aus dem Stand der Technik bekannten Verfahren ermittelten physikalischen Ölparameter sind in aller Regel temperaturabhängig, sodass zur Bestimmung eines Vergleichswerts eine Temperatur-Kompensationsberechnung notwendig ist.

Darüber hinaus besteht bei herkömmlichen Verfahren zur Bestimmung der Ölviskosität die Problematik, dass aufgrund des in Betrieb befindlichen Motors sich ein großer Teil des zu messenden Ölmediums in Umlauf befindet, sodass eine Benutzung des Ölviskositäts-Messsensors u. U. nicht jederzeit in ausreichendem Maße gegeben ist, was bei den durchzuführenden Messungen zu Messungenauigkeiten führen kann.

Aus dem der JP 05 215682 A ist ein System zur Erkennung der Ölalterung bekannt. Dabei wird nach dem Abstellen des Motors die Temperatur des Öls erfasst und eine optische Messung zur Bestimmung der Ölalterung durchgeführt, wenn die Temperatur unter einen vorbestimmten Schwellenwert fällt. Die so bestimmte Ölalterung wird beim Start des Motors durch eine geeignetes Anzeigevorrichtung angezeigt.

Aus der JP 5010866 A ist ein System zur Erfassung der Viskositätsmessung eines Motorenöls bekannt, bei dem die Viskosität mittels Drucksensoren und eines Temperatursensors erfasst wird. In Abhängigkeit von der Viskosität wird in einem weiteren Schritt ein Maß für die Ölalterung abgeschätzt. Überschreitet das Maß für die Ölalterung einen vorgegebenen Wert, wird ein notwendiger Ölwechsel angezeigt.

In der JP 59192937 A wird ein piezoelektrischer Oszillator beschrieben, der in einer Ölwanne eines Motors angeregt wird, um die Viskosität des Öl zu erfassen. Zusammen mit einer Temperaturmessung des Öls wird aus der Viskosität auf die Ölalterung geschlossen.

### Vorteile der Erfindung

Gegenüber den aus dem Stand der Technik bekannten Verfahren zur Messung der Ölviskosität und der daraus resultierenden Beurteilung des Verschleißes des Motoröls bietet das erfindungsgemäße Verfahren mit den im Anspruches 1 genannten Merkmalen den Vorteil, daß durch die gleichzeitige Bestimmung der Öltemperatur durch einen dem Sensor zur Ölviskositätsmessung zugeordneten Temperatur-Messfühler die zuverlässige Aufnahme einer Viskositäts-Temperatur-Kennlinie möglich ist, wobei durch den durch den Temperatur-Viskositätsverlauf charakterisierten Viskositäts-Index eine weitere genaue Bewertungsgröße für die Ölzustandsbeurteilung zur Verfügung steht. Zusätzlich besitzt das erfindungsgemäße Verfahren durch die Messung der Ölviskosität und der Öltemperatur in der Abkühlphase des Motors nach dessen Abstellen den Vorteil, daß die Messungen innerhalb eines relativ großen Temperaturbereiches (unter Annahme von Umgebungstemperaturen im Bereich von 25° C u. Betriebstemperaturen des Motoröls im Bereich bis 150° C) durchgeführt werden können. Ein derartiger Messtemperaturbereich ist natürlich auch während der Aufwärmphase des Motoröls gegeben, wobei jedoch die oben angeführten Nachteile wie mangelnde Benetzung des bzw. der Meßsensoren in Folge des in Betrieb befindlichen Motors auftreten können.

Die Steuerung der Öltemperatur und Ölviskositäts-Messungen sowie die Speicherung und Auswertung der ermittelten Messergebnisse kann erfindungsgemäß durch ein dem Motor zugeordnetes Motorsteuergerät erfolgen. Dies bietet den Vorteil, daß eine besondere Steuerelektronik für die Durchführung des erfindungsgemäßen Verfahrens nicht notwendig ist, da übliche Motorsteuergeräte auch während einer sogenannten Nachlaufzeit nach dem Abstellen des Motors noch in Betrieb sind. Diese Nachlaufzeit beträgt bis zu 30 Minuten, so daß es vorteilhaft ist, auch die Messung von Öltemperatur und Ölviskosität in einem Zeitintervall bis 100 Minuten, vorzugsweise in 10 bis 30 Minuten nach dem Abstellen des Motors durchzuführen. Auf diese Weise ergeben sich zahlreiche Messwerte, die eine für die Verschleißbeurteilung des Motoröls ausreichend genaue Viskositäts-Temperaturkennlinie ermöglichen.

Es kann darüber hinaus zweckmäßig sein, die Auswertung einem im Instrumentenkluster angeordneten Rechner zuzuordnen, was zu einer weiteren Reduzierung der notwendigen Bauelemente führt. Alternativ hierzu ist es natürlich denkbar, die Auswertung in das Motorsteuergerät zu integrieren. Da durch die Bestimmung der Ölviskositäts- und Öltemperaturmesswerte wie deren anschließender Auswertung nach dem Abstellen des Motors erfolgt, ist im Gegensatz zu Auswertezeiten während des Motorbetriebes ausreichend Rechenkapazität für die Messwertauswertung gegeben. Die ermittelten Messwerte können beim nächsten Fahrtbeginn dem Fahrzeugbenutzer durch die der Auswerteelektronik zugeordnete Anzeigevorrichtung vermittelt werden. Da sich der Zustand des Motoröles während einer einzelnen Fahrt nur ganz unwesentlich ändert, ist die Vermittlung der Information über den Ölzustand außerhalb eines "Echtzeitbetriebes" unproblematisch.

### Beschreibung des erfindungsgemäßen Verfahrens

Nach dem Abstellen des Motors eines Kraftfahrzeuges wird durch das am Motor angeordnete Motorsteuergerät der für das erfindungsgemäße Verfahren erforderliche Messzyklus zur gleichzeitigen Bestimmung von Öltemperatur und Ölviskotitätswerten in Gang gesetzt. Es erfolgt in der Abkühlphase des Motors eine kontinuierliche Messung der relevanten Größen in festen Zeitintervallen oder in Abhängigkeit von bestimmbaren Temperaturintervallen des Motoröls.

Beispielsweise ist es denkbar, die Bestimmung der Ölviskositätswerte jeweils bei einer Abkühlung des Motoröls um 5° C durchzuführen. Das Gesamtintervall zur kontinuierlichen Bestimmung von Öltemperatur und Ölviskosität entspricht im wesentlichen der Nachlaufzeit des Motorsteuergerätes. Während dieser Nachläufzeit werden gleichzeitig in einer Auswerteelektronik die gemessenen Öltemperatur / Ölviskositätswerte gespeichert und aus der entsprechenden Kennlinie ein Viskositäts-Index als maßgebliche Größe für die Beurteilung des Motorölverschleißes gebildet.

Wird im Rahmen der Auswertung der aufgenommenen Werte festgestellt, daß der Motorölverschleiß derart weit fortgeschritten ist, daß ein Motorölwechsel notwendig ist, so wird dem Fahrzeugbenutzer beim nächsten Motorstart diese Information durch eine geeignete Anzeigevorrichtung vermittelt.

Selbstverständlich lassen sich in der Abkühlphase des Motors während der Nachlaufzeit des Motorsteuergerätes auch Messwerte von anderen im Fahrzeug vorhandenen Flüssigkeiten aufnehmen und auswerten.

## Patentansprüche

1. Verfahren zur Beurteilung des Verschleißes von Motoröl, bei dem
- die Ölviskosität des Motoröls durch einen Sensor gemessen wird und
- die Öltemperatur durch einen dem Sensor zugeordneten Temperatur-Messfühler bestimmt wird,
wobei vorgesehen ist, dass
- die Ölviskosität und die Öltemperatur gleichzeitig in der Abkühlphase des Motors während fester Zeitintervallen oder bestimmbarer Temperaturintervallen erfasst werden, und
- die Beurteilung des Motorölverschleißes in Abhängigkeit von den erfassten Öltemperatur- und Ölviskositätswerten erfolgt.

2. Verfahren zur Beurteilung des Verschleißes von Motoröl nach Anspruch 1, **dadurch gekennzeichnet, dass** eine Auswerteelektronik vorgesehen ist, die
- die gemessenen Öltemperatur- und Ölviskositätswerte in Form einer Kennlinie speichert und
- in Abhängigkeit dieser Kennlinie eine maßgebliche Größe für die Beurteilung des Motorölverschleißes bildet.

3. Verfahren zur Beurteilung des Verschleißes von Motoröl nach Anspruch 2, **dadurch gekennzeichnet, dass** dem Fahrer bei Erreichen eines fortgeschrittenen Motorölverschleißes über eine der Auswerteelektronik zugeordnete Anzeigevorrichtung ein Motorölwechsel mitgeteilt wird.

4. Verfahren zur Beurteilung des Verschleißes von Motoröl nach Anspruch 2, **dadurch gekennzeichnet, dass** die Öltemperatur und Ölviskositäts-Messung sowie die Auswertung durch ein dem Motor zugeordnetes Motorsteuergerät geregelt und überwacht wird.

5. Verfahren zur Beurteilung des Verschleißes von Motoröl nach einem der Ansprüche 1 oder 2, **dadurch gekennzeichnet, dass** die Messung von Öltemperatur und Ölviskosität in einem Zeitintervall von 10 bis 100 Minuten nach dem Abstellen des Motors erfolgt.

6. Verfahren zur Beurteilung des Verschleißes von Motoröl nach einem der Ansprüche 1 oder 2, **dadurch gekennzeichnet, dass** die Auswertung einem im Instrumentenkluster angeordneten Rechner zugeordnet ist, wobei der Rechner durch das Motorsteuergerät angesteuert und überwacht wird.

## Claims

1. Method for assessing the deterioration of engine oil, in which
- the oil viscosity of the engine oil is measured by a sensor and
- the oil temperature is determined by a temperature measuring element assigned to the sensor,
it being provided that
- the oil viscosity and the oil temperature are recorded at the same time in the cooling phase of the engine during fixed time intervals or determinable temperature intervals, and
- the assessment of the engine oil deterioration takes place in dependence on the recorded oil temperature and oil viscosity values.

2. Method for assessing the deterioration of engine oil according to Claim 1, **characterized in that** evaluation electronics are provided, which
- store the measured oil temperature and oil viscosity values in the form of a characteristic curve and,
- in dependence on this characteristic curve, form a decisive measure for the assessment of the engine oil deterioration.

3. Method for assessing the deterioration of engine oil according to Claim 2, **characterized in that**, when the engine oil reaches an advanced state of deterioration, the driver is notified of an engine oil change by means of an indicating device assigned to the evaluation electronics.

4. Method for assessing the deterioration of engine oil according to Claim 2, **characterized in that** the oil temperature and oil viscosity measurement as well as the evaluation are controlled and monitored by an engine control unit assigned to the engine.

5. Method for assessing the deterioration of engine oil according to either of Claims 1 and 2, **characterized in that** the measurement of the oil temperature and oil viscosity takes place in a time interval of 10 to 100 minutes after the engine is switched off.

6. Method for assessing the deterioration of engine oil according to either of Claims 1 and 2, **characterized in that** the evaluation is assigned to a computer arranged in the instrument cluster, the computer being activated and monitored by the engine control unit.

## Revendications

1. Procédé d'évaluation de l'usure d'une huile pour moteur, selon lequel
- on mesure la viscosité de l'huile moteur à l'aide d'un capteur,
- on détermine la température de l'huile à l'aide d'une sonde de température associée au capteur,
- on enregistre la viscosité et la température de l'huile simultanément dans la phase de refroidissement du moteur pendant des intervalles de temps fixes ou dans des intervalles de températures pouvant être déterminés, et
- l'évaluation de l'usure de l'huile s'effectue en fonction des valeurs de température et de viscosité enregistrées.

2. Procédé d'évaluation de l'usure d'une huile pour moteur selon la revendication 1,
**caractérisé en ce qu'**
une électronique d'exploitation
- enregistre les valeurs de température et de viscosité mesurées sous la forme d'une caractéristique, et
- forme une grandeur caractéristique pour l'évaluation de l'usure de l'huile en fonction de cette caractéristique.

3. Procédé d'évaluation de l'usure d'une huile pour moteur selon la revendication 2,
**caractérisé en ce que**
lorsque l'on atteint une usure d'huile permanente, un changement d'huile est signalé au conducteur par l'intermédiaire d'un dispositif d'affichage associé à l'électronique d'exploitation.

4. Procédé d'évaluation de l'usure d'une huile pour moteur selon la revendication 2,
**caractérisé en ce que**
la température et la viscosité de l'huile, ainsi que l'exploitation, sont régulées et contrôlées par un appareil de commande du moteur associé au moteur.

5. Procédé d'évaluation de l'usure d'une huile pour moteur selon l'une des revendications 1 ou 2,
**caractérisé en ce que**
la mesure de la température et de la viscosité de l'huile s'effectuent dans un intervalle de temps de 10 à 100 minutes après l'arrêt du moteur.

6. Procédé d'évaluation de l'usure d'une huile pour moteur selon l'une des revendications 1 ou 2,
**caractérisé en ce que**
l'exploitation est associée à un calculateur disposé dans le tableau de bord, le calculateur étant commandé et contrôlé par l'appareil de commande du moteur.
